# EUROPEAN PATENT APPLICATION

(11) **EP 3 339 676 A1**
(43) Date of publication of application: **27.06.2018**
(21) Application number: 16824754.2
(22) Date of filing: 15.07.2016
(51) Int. Cl.: F16F 3/02, F16F 3/04, B21F 35/00

(54) **SPRING STRUCTURE HAVING MULTIPLE COIL-SHAPED UNIT SPRINGS AND METHOD FOR MANUFACTURING SAME**

(30) Priority: 16.07.2015 KR 20150101221
(71) Applicant: Kim, Hyung Woo, Goyang-si, Gyeonggi-do 10374 (KR); Kim, Gyun Hwan, Goyang-si, Gyeonggi-do 10374 (KR)
(72) Inventor: Kim, Hyung Woo, Goyang-si, Gyeonggi-do 10374 (KR); Kim, Gyun Hwan, Goyang-si, Gyeonggi-do 10374 (KR)
(74) Representative: Lermer, Christoph
(86) International application number: PCT/KR2016/007726
(87) International publication number: WO 2017/010838

(57) **Abstract**

The present invention relates to a spring structure and a method for manufacturing the same. More specifically, the present invention relates to a spring structure and a method for manufacturing the same, the spring structure including: a coil-shaped spring portion including multiple coil-shaped unit springs having a same inner diameter center axis, and alternately arranged at regular intervals such that a wire rod of one of the coil-shaped unit springs and a wire rod of a remaining one of the coil-shaped unit springs overlap each other; and a support portion having a non-spring structure, the support portion being connected with each of the coil-shaped unit springs and supporting the coil-shaped spring portion, thereby providing the support portion and the coil-shaped spring portion that are formed integrally with each other.

## Description

### Technical Field

The present invention relates generally to a spring structure and a method for manufacturing the same. More particularly, the present invention relates to a spring structure and a method for manufacturing the same, wherein the spring structure is configured such that a support portion having a non-spring structure is provided at one or opposite ends of the spring structure, and multiple coil-shaped unit springs having the same inner diameter center axis are connected with the support portion and alternately arranged parallel to each other at regular intervals in an overlapping alignment, thereby forming a coil-shaped spring portion. Thus, the support portion and the coil-shaped spring portion are provided integrally with each other.

### Background Art

As well known in the art, a spring, which is a mechanical element that absorbs and stores energy by utilizing elastic deformation thereof and produces a buffer action, is used in various
products such as a medical device, a spring balance, furniture such as bed and sofa, a safety valve, a vehicle, etc. The spring is made of various materials such as metal, etc., and has various shapes such as a coil shape, a ring shape, and a dish shape. A coil spring, which is one type of the spring, is formed by winding a rod-shaped metal material into a spiral shape as described in the following patent document.

### (Patent Document 1)

Korean Patent Application Publication No. 10-2002-0019737 (published on March 03, 2002) "Coil spring and manufacturing process thereof"

However, since a conventional coil spring is manufactured by winding the rod-shaped metal material having elasticity into a spiral shape, there is a problem that internal cracks and residual stress may occur due to plastic deformation occurring upon winding manufacture, thereby limiting the shape of the coil spring and thus limiting other functions.

Further, Japanese Patent Application Publication No. H10-122285 (published on May 12, 1998) disclosed a structure in which a single coil-shaped spring is provided on a conventional support portion having a non-spring structure is problematic in that when a housing covering an outer diameter of the spring is absent and an eccentric force is applied to the spring at a position deviating from a center axis of an inner diameter thereof, a pitch (or wire rod) interval in a direction in which the force is applied is remarkably reduced, and pitch (or wire rod) intervals in directions facing each other with respect to the center axis are relatively less reduced. In addition, when thickness of the spring wire rod is not sufficient, the spring itself is significantly bent. In other words, the force applied may not be distributed uniformly over the entire spring.

Further, the structure in which the single coil-shaped spring is provided on the support portion of the non-spring structure is still problematic in that a tensile force, a compressive force, and a bending force may be insufficient.

In addition, in the case that coil-shaped unit springs in the same number are formed from an upper end to a lower end of a coil-shaped spring portion, the range of elasticity is determined only by a pitch number, an interval a material of a solid body, and outer and inner diameters of the coil-shaped portion. Thus, a conventional spring structure may fail to expand the range of elasticity such that one spring exerts elasticity responding to impact forces having various magnitudes. In other words, in the conventional spring structure, a range, which is from magnitude of a force that elasticity starts to exert when pressure or impact is applied to magnitude of a force that elasticity does not exert even when the impact is applied, is small, and elasticity is exerted only for a continuous force. In other words, for example, there was no spring having a special function that exerts elasticity responding to a force having a magnitude of 1 to 3, does not exert elasticity responding to a force having a magnitude of 4 to 6, and exerts elasticity responding again to a force having a magnitude of 7 to 9.

### Disclosure

### Technical Problem

Accordingly, the present invention has been made keeping in mind the above problems occurring in the related art.

An object of the present invention is to provide a spring structure and a method for manufacturing the same, wherein multiple coil-shaped unit springs providing an elastic force are alternately arranged parallel to each other at regular intervals in an overlapping alignment, the coil-shaped unit springs being configured to have the same inner diameter center axis and to be connected to each other by a support portion having a non-spring structure, the support portion being provided at one or opposite ends of the spring structure.

Another object of the present invention is to provide a spring structure and a method for manufacturing the same, wherein a solid body having a predetermined width and length is cut to form a spring, thereby forming a coil-shaped spring portion including multiple coil-shaped unit springs arranged parallel to each other at regular intervals in an overlapping alignment and thus manufacturing a single spring structure without performing a welding process. Thus, ease of manufacture, elasticity, and rigidity are enhanced.

A further object of the present invention is to provide a spring structure and a method for manufacturing the same, wherein a support portion is provided on at least one of upper and lower ends of a coil-shaped spring portion or support portions are provided between a plurality of coil-shaped spring portions, whereby a contact area with an object applied with an elastic force of a spring and thus the elastic force of the spring is efficiently transmitted to the object.

Yet another object of the present invention is to provide a spring structure and a method for manufacturing the same, wherein a coil-shaped spring portion is configured such that the inner diameter center axis and the outer diameter center axis do not coincide with each other, and shapes and widths of the spring portion vary, which is different from a conventional spring.

Still another object of the present invention is to provide a spring structure and a method for manufacturing the same, wherein multiple coil-shaped springs rather than a single coil-shaped spring are connected to a support portion having a non-spring structure such that the respective coil-shaped springs are uniformly distributed at the support portion in 360 degrees and thus are uniformly supported in 360 degrees. Thus, even when an eccentric force is exerted on the support portion at a position deviating from the inner diameter center axis of the coil-shaped spring portion, impacts are more efficiently uniformly dispersed to the entire spring structure.

A further object of the present invention is to provide a spring structure and a method for manufacturing the same, wherein the spring structure is configured such that a different number of coil-shaped unit springs is provided in each section of a coil-shaped spring portion or a plurality of coil-shaped spring portions each has a different number of coil-shaped unit springs, thereby providing an excellent effect of expanding the range of elasticity so as to respond to from small to large impact forces.

A further object of the present invention is to provide a spring structure and a method for manufacturing the same, the spring structure having a special function of stepwisely responding to a continuous force rather than a spring structure continuously responding to the continuous force. For example, a conventional spring responds continuously to a force having a magnitude of 1 to 9, whereas a developed product exerts elasticity responding to a force having a magnitude of 1 to 3, does not exert elasticity responding to a force having a magnitude of 4 to 6, and exerts again elasticity responding to a force having a magnitude of 7 to 9.
A further object of the present invention is to provide a spring structure and a method for manufacturing the same, wherein the spring structure having a small outer diameter efficiently performs a spring function without provision of a structure for covering the outer diameter which included in a conventional coil spring.

A further object of the present invention is to provide a spring structure and a method for manufacturing the same, wherein one or opposite ends of a coil-shaped spring portion are closed by a support portion having a non-spring structure without performing an additional joining process such as welding, and the spring portion and the support portion are provided integrally with each other.
Thus, the spring structure is easily combined with other structures.

A further object of the present invention is to provide a spring structure and a method for manufacturing the same, wherein the non-spring structure of a support portion itself is formed in various shapes.

A further object of the present invention is to provide a spring structure and a method for manufacturing the same, wherein the spring structure is manufactured by cutting a solid body, whereby each of the coil-shaped unit springs of the coil-shaped spring portion is configured such that the vertical thickness T2 in each section is formed differently and thus the range of elasticity responding to impacts is significantly expanded.

A further object of the present invention is to provide a spring structure and a method for manufacturing the same, wherein when the solid body is made of metal, the spring structure is manufactured by cutting the solid body or by using a 3D printer rather than winding the solid body. Thus, the spring structure is more easily increased in size and thus is economical.

### Technical Solution

In order to accomplish the above object, the present invention is implemented by the following embodiments.

According to one aspect of the present invention, there is provided a spring structure having multiple coil-shaped unit springs, the spring structure including: a coil-shaped spring portion including the multiple coil-shaped unit springs having a same inner diameter center axis, and alternately arranged at regular intervals such that a wire rod of one of the coil-shaped unit springs and a wire rod of a remaining one of the coil-shaped unit springs overlap each other; and a support portion having a non-spring structure, the support portion being connected with each of the coil-shaped unit springs and supporting the coil-shaped spring portion.

According to an embodiment of the present invention, the spring structure having the multiple coil-shaped unit springs may further include a through hole passing through the support portion and the coil-shaped spring portion.

According to an embodiment of the present invention, the spring structure having the multiple coil-shaped unit springs may further include an indentation groove formed by indenting the support portion and the coil- shaped spring portion.

According to an embodiment of the present invention, in the spring structure having the coil-shaped spring portion having the multiple coil-shaped unit springs, the coil-shaped unit springs may have a spiral shape and may be made of an elastic material, and the support portion may be provided on at least one of upper and lower ends of the coil-shaped spring portion.

According to an embodiment of the present invention, the spring structure according to the present invention may include a spring structure having a unique shape in which the coil-shaped spring portion is configured such that a different number of coil-shaped unit springs is provided in each section.

According to an embodiment of the present invention, the spring structure according to the present invention may include a plurality of coil-shaped spring portions each including the multiple coil-shaped unit springs, and the spring portions having a non-spring structure may be provided between the coil-shaped spring portions. The coil-shaped spring portions may differ in number of coil-shaped unit springs and in vertical thickness T2 of the wire rod.

According to an embodiment of the present invention, the spring structure having the multiple coil-shaped unit springs may include a spring structure having a unique shape in which the length T1 of the wire rod determined by subtracting 1/2 of the inner diameter of the coil-shaped spring portion from 1/2 of the outer diameter thereof is at least four times greater than the vertical thickness T2 of the wire rod of the coil-shaped spring portion.

According to an embodiment of the present invention, in the spring structure having the coil-shaped spring portion having the multiple coil-shaped unit springs, at least one vertical hole may be formed in upper and lower ends of the spring structure at a position different from the inner diameter of the coil-shaped spring portion, whereby weight reduction is achieved while durability and elastic force are maintained.

According to an embodiment of the present invention, the spring structure having the multiple coil-shaped unit springs may be made of metal or a polymer based material such as plastic.

According to an embodiment of the present invention, in the spring structure having the coil-shaped spring portion having the multiple coil-shaped unit springs, a non-metallic elastic material may be inserted between the wire rods of a coil-shaped spring portion whereby the spring structure exerting a high elastic response rate and the non-metallic elastic material exerting one tempo slower elastic response rate than the spring structure are combined to thereby exhibit a special function.
According to an embodiment of the present invention, in the spring structure having the coil-shaped spring portion having the multiple coil-shaped unit springs, the area of the outer horizontal cross section of the coil-shaped spring portion may be greater than ten times the area of the inner horizontal cross section with respect to the same portion.

According to an embodiment of the present invention, in the spring structure having the coil-shaped spring portion having the multiple coil-shaped unit springs, the length T1 in horizontal cross section of the coil-shaped spring portion, which is 1/2 of a value determined by subtracting the inner diameter of the coil-shaped spring portion from the outer diameter thereof, may be at least four times greater than the vertical thickness T2 of the wire rod of the coil-shaped spring portion.

According to an embodiment of the present invention, in the spring structure having the multiple coil-shaped unit springs, each of the multiple coil-shaped unit springs of the coil-shaped spring portion may be configured such that a pitch interval or the vertical thickness T2 of the wire rod in each section is formed differently.

According to an embodiment of the present invention, in the spring structure having the multiple coil-shaped unit springs, the support portion having a non-spring structure may have various shapes, and may be provided with a horizontal through hole or a vertical hole.

According to an embodiment of the present invention, in the spring structure having the coil-shaped spring portion having the multiple coil-shaped unit springs, the coil-shaped spring portion may be configured such that the inner diameter center axis and the outer diameter center axis do not coincide with each other.

According to an embodiment of the present invention, the spring structure having the multiple coil-shaped unit springs may be formed by cutting a solid body having a predetermined width and length.

According to another aspect of the present invention, there is provided a method of manufacturing a metal spring structure having multiple coil-shaped unit springs, the method including: forming a spring structure by cutting an outer side surface of a solid body in a spiral shape to form a plurality of spiral grooves arranged parallel to each other at regular intervals, thereby forming a coil-shaped spring portion including the multiple coil-shaped unit springs arranged parallel to each other at regular intervals in an overlapping alignment and forming a support portion having a non-spring structure, the support portion being connected with each of the coil-shaped unit springs.

According to an embodiment of the present invention, in the method of manufacturing the spring structure having the coil-shaped spring portion having the multiple coil-shaped unit springs, in the case that the solid body has a tube shape having a through hole passing through upper and lower surfaces thereof or the solid body is provided with an indentation hole formed by indenting from a first end to a second end of one of the upper and lower surfaces of the solid body, the through hole and the indentation hole defining the inner diameter of the coil-shaped spring portion, when the outer surface of the solid body is spirally cut to the hole of the solid body, there is no need to additionally form the through hole defining the inner diameter of the coil-shaped spring portion. However, in the case that the solid body has a rod shape rather than a tube shape, the method may further include: forming an inner diameter of the coil-shaped spring portion by forming a vertical hole defining the inner diameter of the coil-shaped spring portion after cutting the outer side surface of the solid body.

According to an embodiment of the present invention, in the method of manufacturing the spring structure having the coil-shaped spring portion having the multiple coil-shaped unit springs, the vertical hole may be the through hole passing through the upper and lower surfaces of the solid body, may be a hole formed in one of the upper and lower surfaces of the solid body.

According to an embodiment of the present invention, the method of manufacturing the spring structure having the coil-shaped spring portion having the multiple coil-shaped unit springs may further include: forming a through hole by cutting the solid body from upward to downward, the through hole passing through the upper and lower surfaces of the solid body and defining the inner diameter of the coil-shaped spring portion.

According to a further aspect of the present invention, there is provided a method of manufacturing a metal spring structure having a support portion and a coil-shaped spring portion having multiple coil-shaped unit springs, wherein a linear-shaped cutting part S of a processing machine such as a wire-cut electric discharge machine may be placed at an end C or C' of the solid body such that the cutting part horizontally passes a portion that will be the inner diameter center axis of the coil-shaped spring portion. Thereafter, one or both the solid body and the cutting part S may be rotated and at the same time, one or both the solid body and the cutting part S may be moved forward or backward along the portion that will be the inner diameter center axis of the coil-shaped spring portion to cut the solid body, thereby simultaneously forming two coil-shaped unit springs. Herein, the center axis of rotation of the solid body or the cutting part S must coincide with the portion that will be the inner diameter center axis of the coil-shaped spring portion.

According to a still another aspect of the present invention, there is provided a method of manufacturing a metal spring structure having a coil-shaped spring portion having multiple coil-shaped unit springs, wherein a side through hole D is formed by horizontally passing through the side surface of the solid body so as to pass the portion that will be the inner diameter center axis of the coil-shaped spring portion, and a linear-shaped cutting part S of a processing machine such as a wire-cut electric discharge machine may be placed in the side through hole. Thereafter, one or both the solid body and the cutting part S may be rotated and at the same time, one or both the solid body and the cutting part S may be moved forward or backward along the portion that will be the inner diameter center axis of the coil-shaped spring portion to cut the solid body, thereby simultaneously forming two coil-shaped unit springs and forming a support portion having a non-spring structure at one or opposite ends of the solid body. Herein, when the solid body and the cutting part S are rotated at the same time, the center axes of rotation thereof must coincide with each other and must coincide with the portion that will be the inner diameter center axis of the coil-shaped spring portion. When the solid body and the cutting part S are moved, they must be moved along the portion that will be the inner diameter center axis of the coil-shaped spring portion. In this case, the solid body or the cutting part S may be adjusted in moving speed in forward and backward directions and in rotational speed, thereby variously forming the vertical thickness T2 of the wire rods of the coil-shaped unit springs.

### Advantageous Effects

The present invention can achieve the following effects by the present embodiment described above.

The present invention is advantageous in that the multiple coil-shaped unit springs providing an elastic force can be alternately arranged parallel to each other at regular intervals in an overlapping alignment.

Further, since the solid body having a predetermined width and length is cut to form a spring, a single spring structure can be manufactured without performing of a welding process wherein the coil-shaped spring portion includes the multiple coil-shaped unit springs alternately arranged parallel to each other at regular intervals in an overlapping alignment, and the support portion is connected with each of the coil-shaped unit springs and supports the coil-shaped spring portion.
Thus, ease of manufacturing and rigidity of the spring structure can be enhanced.

In addition, since the coil-shaped spring portion is not formed by winding the solid body, plastic deformation due to the change in shape of the solid body can be prevented and thus cracks or stress can be prevented from being generated during manufacturing, thereby improving durability of the spring structure.

Furthermore, since the coil-shaped spring portion including the multiple coil-shaped unit springs and the support portion having a non-spring structure can be simultaneously formed by a single cutting process, the present invention can provide excellent economical efficiency in manufacturing cost.

Further, a single spring structure can be configured such that the plurality of coil-shaped spring portions each has a different number of coil-shaped unit springs or the coil-shaped spring portion has a different number of coil-shaped unit springs in each section. Thus, the range of elasticity responding to impacts can be expanded, and a special function that does not respond to a force having a predetermined magnitude with respect to a force applied continuously increases can be imparted. In addition, the solid body and the cutting part S can be adjusted in rotational speed and moving speed during a cutting process, whereby each of the coil-shaped unit springs of the coil-shaped spring portion can be configured such that the vertical thickness T2 of the wire rod in each section is formed differently, and thus the range of elasticity responding to impacts can be expanded.

Further, since the support portion is provided at least one of the upper and lower ends of the coil-shaped spring portion and connected with each of the multiple coil-shaped unit springs, the load and impact transmitted to the support portion can be dispersed more efficiently and uniformly to the entire spring structure. In addition, the contact area with an object to which an elastic force of the spring is applied can be increased, thereby efficiently transmitting the elastic force of the spring to the object.

Further, the through hole can be positioned eccentrically from the center axis of the spring as occasion demands, that is, the outer diameter center axis and the inner diameter center axis of the coil-shaped spring portion may not coincide with each other. Thus, the spring can have various shapes and widths, etc., which differ from a conventional spring.

Further, the multiple coil-shaped unit springs of the coil-shaped spring portion of the spring structure can be configured such that the area of the outer horizontal cross section is greater than ten times the area of the inner horizontal cross section, thereby manufacturing a special spring which is excellent in durability, elasticity, and bending performance.
Further, the multiple coil-shaped unit springs of the coil-shaped spring portion of the spring structure can be configured such that the horizontal thickness of the wire rod is greater than four times the vertical thickness of the wire rod, thereby manufacturing a special spring.

Further, the coil-shaped spring portion can be configured such that the vertical thickness of the wire rod in each section is formed differently.

Further, the present invention can be easily applied to other structures by the support portion without performing a separate coupling process.

Further, a support portion in a closed shape having no vertical hole passing through the inner diameter of the coil-shaped spring portion can be integrally formed at an end of the coil-shaped spring portion, thereby easily manufacturing a special spring used in a special field.

### Description of Drawings

FIG. 1 is a perspective view showing a spring structure according to an embodiment of the present invention.
FIG. 2 is a longitudinal cross-sectional view showing the spring structure of FIG. 1.
FIG. 3 is a cross-sectional view showing a coil-shaped spring portion of the spring structure of FIG. 1.
FIG. 4 is a longitudinal cross-sectional view showing a spring structure according to a second embodiment of the present invention.
FIG. 5 is a perspective view showing a spring structure according to a third embodiment of the present invention.
FIG. 6 is a longitudinal cross-sectional view showing the spring structure of FIG. 5.
FIG. 7 is a cross-sectional view showing a coil-shaped spring portion of the spring structure of FIG. 5.
FIG. 8 is a perspective view showing a spring structure according to a fourth embodiment of the invention.
FIG. 9 is a perspective view showing a spring structure according to a fifth embodiment of the invention.
FIG. 10 is a longitudinal cross-sectional view showing a spring structure according to a sixth embodiment of the present invention.
FIG. 11 is a perspective view showing a spring structure according to a seventh embodiment of the present invention.
FIGS. 12 to 15 are reference views showing a method of manufacturing the spring of FIG. 5.
FIGS. 16 to 18 are reference views showing a method of manufacturing a spring structure according to another embodiment of the present invention.
FIG. 19 is a reference view showing a method of manufacturing a spring structure according to a further embodiment of the present invention.
FIGS. 20 and 21 are reference views showing a method of manufacturing a spring structure according to yet another embodiment of the present invention.

### <Description of the Reference Numerals in the Drawings>

1, 2, 3: spring structure
11: coil-shaped spring portion
11: coil-shaped spring portion
13: through hole
14: indentation groove
111: coil-shaped unit spring
15: vertical hole
A: outer diameter center axis
B: inner diameter center axis
C, C': end of solid body
D: side through hole of solid body
S: cutting part

### Best Mode

Hereinafter, a spring structure having a coil- shaped spring portion having multiple coil-shaped unit springs and a method for manufacturing the same will be described in detail with reference to the accompanying drawings. Unless otherwise defined, all terms including technical and scientific terms used herein have the same meaning as commonly understood by one of ordinary skill in the art to which this invention belongs. When terms used herein discord from the commonly understood meaning, the terms will be interpreted as defined herein. It will be further understood that the terms "comprises", "comprising", "includes", and/or "including" when used herein, specify the presence of stated features, integers, steps, operations, elements, and/or components, but do not preclude the presence or addition of one or more other features, integers, steps, operations, elements, components, and/or groups thereof.

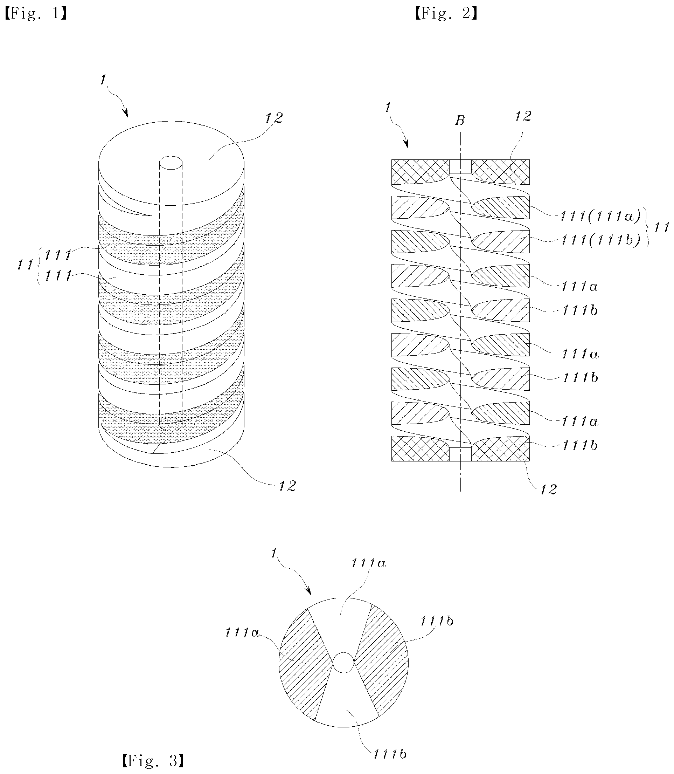

A spring structure having multiple coil-shaped unit springs according to an embodiment of the present invention will be described with reference to FIGS. 1 to 3. The spring structure 1 includes: a coil-shaped spring portion 11 including the multiple coil-shaped unit springs 111 arranged parallel to each other at regular intervals in an overlapping alignment; and a support portion 12 connected with each of the multiple coil-shaped unit springs 111 and supporting the coil-shaped spring portion 11.

The coil-shaped spring portion 11 is configured to provide an elastic force in the spring structure 1 and includes the multiple coil-shaped unit springs 111 that are alternately arranged parallel to each other at regular intervals in an overlapping alignment. The multiple coil-shaped unit springs 111 have the same inner diameter center axis, wherein each of the coil-shaped unit springs 111 has a spiral shape and is made of an elastic material, and may have a spiral-like plate shape and may be made of an elastic metal. FIGS. 1 to 3 show the coil-shaped spring portion 11 including two coil-shaped unit springs llla and lllb. Alternatively, for example, the coil-shaped spring portion may be configured such that at least three coil-shaped unit springs are arranged parallel to each other at regular intervals in an overlapping alignment.

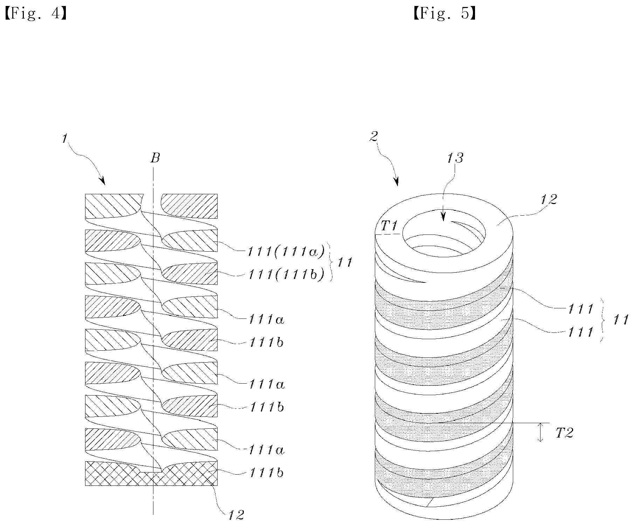

The support portion 12 is connected with each of the multiple coil-shaped unit springs 111 to support the coil-shaped spring portion 11. For example, as shown in FIGS. 1 to 3, the support portion 12 may be positioned at each of upper and lower ends of the coil-shaped spring portion 11 to close the upper and lower ends of the coil-shaped spring portion 11. The spring structure 1 having the above configuration is characterized in that the multiple coil-shaped unit springs 111 connected to the support portion 12 are alternately arranged parallel to each other at regular intervals in an overlapping alignment, so that an increased elastic force can be achieved and impacts applied to the support portion 12 can be efficiently dispersed to the entire spring structure 1 through the multiple coil-shaped unit springs 111 connected to the support portion 12. In addition, the support portion 12 is positioned at each of opposite ends of the coil-shaped spring portion 11 for closure thereof, so that the contact area with an object applied with an elastic force of the spring structure 1 can be increased and thus the elastic force of the spring structure 1 can be efficiently transmitted to the object. Moreover, in the case that a housing covering the outer diameter of the spring structure is absent, even when a vertical force deviating from the center axis of the outer diameter of the coil-shaped spring portion is applied to the spring structure, an impact dispersion effect, which is much more stable and efficient than a conventional coil spring structure in which only one coil-shaped unit spring is provided at a support portion having a non-spring structure, can be achieved. The spring structure 1 described with reference to FIGS. 1 to 3 is characterized in that the support portion 12 is provided at each of the opposite ends of the coil-shaped spring portion 11. However, as shown in FIG. 4, the support portion 12 may be provided at any portion of the coil-shaped spring portion 11, including an end of the coil-shaped spring portion 11. The multiple coil-shaped unit springs 111 have the same inner diameter center axis B. In addition, although not shown in the drawings, a spring structure having a support portion having a closed shape and provided at opposite ends of the coil-shaped spring portion may be possible.

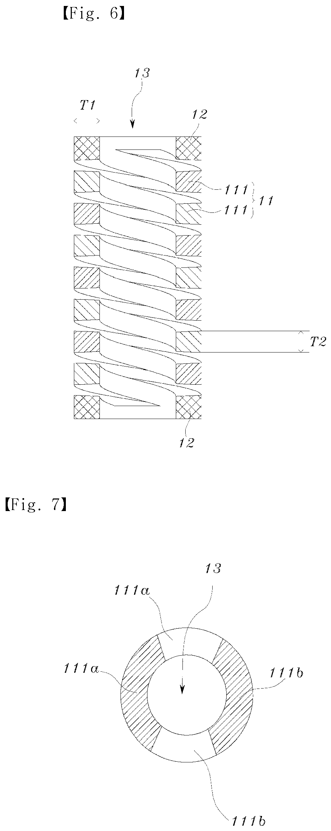

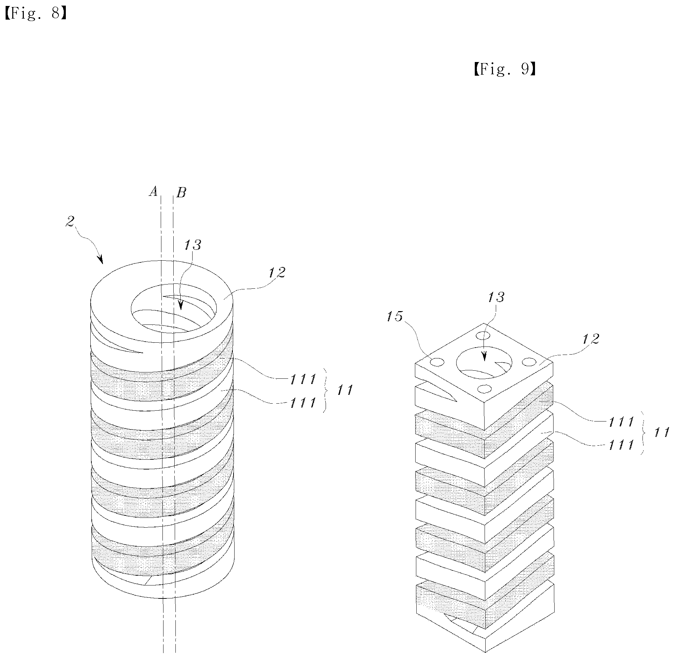

A spring structure having multiple coil-shaped unit springs according to a third embodiment of the present invention will be described with reference to FIGS. 5 to 7. A spring structure 2 is configured such that a through hole 13 passing through vertically the support portion 12 and the coil-shaped spring portion 11 is further included in the spring structure 1 described with reference to FIGS. 1 to 3. The through hole 13 has a predetermined shape and may have a cylindrical shape. In the spring structure 2 described with reference to FIGS. 5 to 7, the through hole 13 is positioned at a center of the spring structure 2. However, as shown in FIG. 8, the through hole 13 may be eccentrically positioned from a center axis A of the spring structure 2 such that a center axis B of the through hole 13 does not coincide with an outer diameter center axis A of the coil-shaped spring portion 11 of the spring structure 2. In other words, the outer diameter center axis A and an inner diameter center axis B of the coil-shaped spring portion 11 may not coincide with each other. In addition, the spring structure 2 described with reference to FIGS. 5 to 7 has a cylindrical shape. However, the spring structure 2 may have a polygonal cylinder shape including a rectangular cylinder as shown in FIG. 9 or may have other various shapes (not shown). The spring structure is configured such that a horizontal length T1 of a wire rod determined by subtracting 1/2 of the inner diameter of the coil-shaped spring portion 11 from 1/2 of the outer diameter thereof is at least four times greater than a vertical thickness T2 of the wire rod of the coil-shaped spring portion 11. In addition, at least one
vertical hole 15 is formed in upper and lower ends of the spring structure at a position different from the inner diameter of the coil-shaped spring portion, whereby weight reduction can be achieved while durability and elastic force
can be maintained. Moreover, a non-metallic elastic material is inserted between the wire rods of the coil-shaped spring portion whereby the spring structure exerting a high elastic response rate and the non-metallic elastic material exerting one tempo slower elastic response rate than the spring structure are combined to thereby exhibit a special function. The area of the outer horizontal cross section of the coil-shaped spring portion is at least ten times greater than the area of the inner horizontal cross section with respect to the same portion. The elastic material may be a synthetic resin such as synthetic rubber or the like.

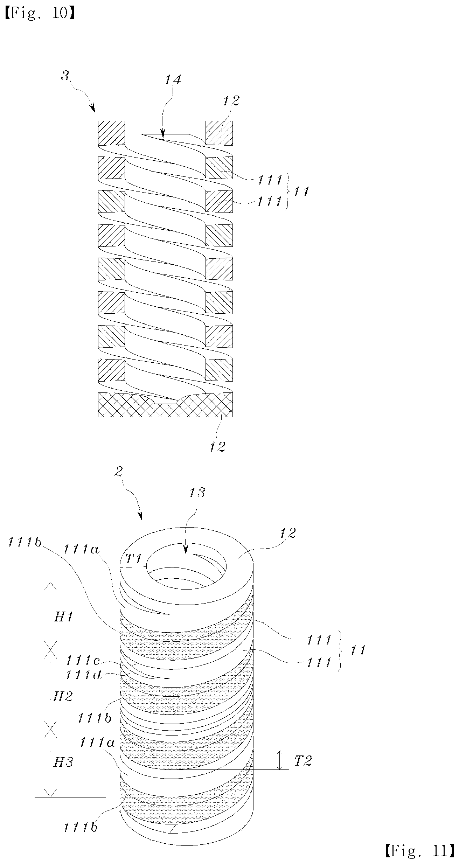

A spring structure having multiple coil-shaped unit springs according to a sixth embodiment of the present invention will be described with reference to FIG. 10. A spring structure 3 is configured such that an indentation groove 14 formed by indenting the support portion 12 and the coil-shaped spring portion 11 on an end of the spring structure is further included in the spring structure described with reference to FIGS. 1 to 3. The spring structure described with reference to FIGS. 1 to 10 is an example of the present invention, and the present invention includes a spring structure having various shapes in which the coil-shaped spring portion 11, the support portion 12, the through hole 13, and the indentation groove 14 are selectively provided, and the support portion 12 having a non-spring structure and the coil-shaped spring portion 11 are provided integrally with each other. The spring structure according to the present invention is manufactured by cutting a solid body having a predetermined shape into a spiral shape, which differs from a conventional method of manufacturing a spring by winding a rod in a spiral shape. Thus, the coil-shaped spring portion including the multiple coil-shaped unit springs arranged parallel to each other at regular intervals in an overlapping alignment, and the support portion having a non-spring structure are integrated with each other, thereby forming a spring structure without requiring a welding process or a connection structure. According to a seventh embodiment of the present invention, as shown in FIG. 11, a different number of coil-shaped unit springs 111 may be provided in each section of the coil-shaped spring portion 11. For example, referring to FIG. 11, two coil-shaped unit springs 111a and 111b are provided in a first section H1 located at the upper position, three coil-shaped unit springs 111a, 111c, and llld are provided in a second section H2 located at the central position, and two coil-shaped unit springs 111a and 111b are provided in a third section H3 located at the lower position. According to the seventh embodiment of the present invention, although not shown in the drawings, a spring structure including a plurality of coil-shaped spring portions each having a different number of coil-shaped unit springs may be possible.

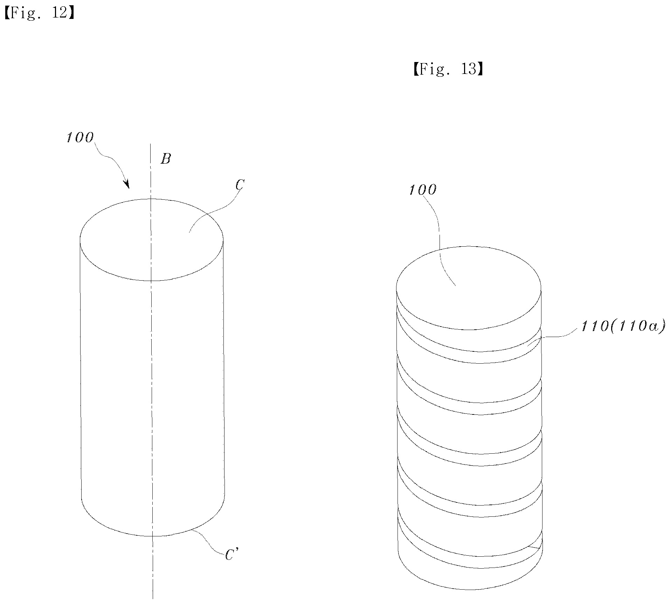

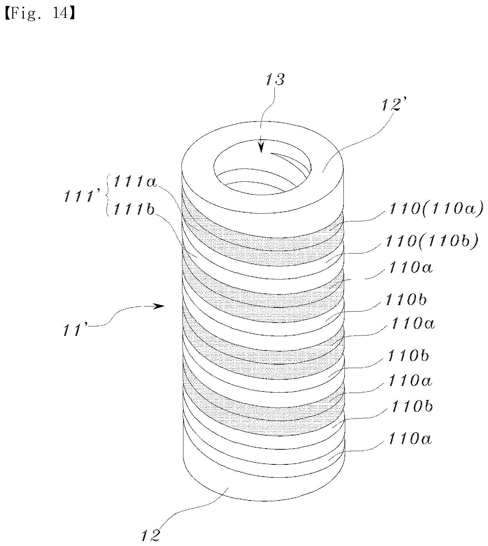

Hereinafter, a method of manufacturing an integrated spring structure having multiple coil-shaped unit springs having the above configuration will be described in detail. Hereinafter, as an example of the method of manufacturing the spring structure, a method of manufacturing the spring structure 2 shown in FIG. 5 will be described with reference to FIGS. 12 to 15.

The method of manufacturing the spring structure in which the support portion having a non-spring structure and the coil-shaped spring portion including the multiple coil-shaped unit springs are integrated with each other includes: forming coil-shaped unit portions by cutting a solid body 100 in a spiral shape along an outer side surface thereof to form a coil-shaped portion 11' and a support portion 12'; and forming a through hole by cutting the solid body 100 from upward to downward to form a through hole 13 passing through upper and lower surfaces of the solid body 100. The through hole 13 defines the inner diameter of the coil-shaped spring portion.

In the forming of the coil-shaped unit portions, a plurality of spiral grooves 110 formed by cutting the solid body 100 in a spiral shape along the outer side surface thereof are arranged parallel to each other at regular intervals, thereby forming a plurality of coil-shaped unit portions 111' arranged parallel to each other at regular intervals in an overlapping alignment and forming the support portion 12' connected to the plurality of coil-shaped unit portions 111'. The solid body 100 is made of a metal having elasticity and has a rod shape having a predetermined width and length. The spiral grooves 110 have a predetermined width and depth, and may be configured such that the depth is greater than the radius of the solid body. As shown in FIG. 12, in the case of using a cylinder-shaped solid body 100, the vertical through hole passing through the upper and lower surfaces of the solid body is formed to define the inner diameter of the coil-shaped spring portion, thereby manufacturing the structure 2 as shown in FIG. 5. Although not shown in the drawings, in the case of using a rectangular cylinder-shaped solid body, the spring structure as shown in FIG. 9 is manufactured.

An example of the forming of the coil-shaped unit springs is described in detail. When a cutting tool (not shown) pressurizes the side surface of the solid body 100 in the state in which the solid body 100 as shown in FIG. 12 is moved in the lengthwise direction thereof while being rotated, a first spiral groove 110a as shown in FIG. 13 is formed to form one coil-shaped unit portion 111'. Thereafter, in the state in which the solid body 100 is returned to its original position and the solid body 100 is moved in the lengthwise direction thereof while being rotated, when the cutting tool pressurizes the side surface of the solid body 100 at a position distanced from the first spiral groove 110a at a predetermined interval, a second spiral groove 110b is formed parallel to the first spiral groove 110a. Further, in the case that the solid body has a rod shape rather than a tube shape, the vertical through
hole is formed by passing through the upper and lower surfaces of the solid body to define the inner diameter of the coil-shaped spring portion. Due to the above process, two spiral grooves llla and lllb are vertically formed parallel to each other at a regular interval, so that two coil-shaped unit springs llla and lllb arranged at a regular interval in an overlapping alignment are formed, and the support portion 12' is formed at each of upper and lower end of the coil-shaped portion to be connected to the two coil-shaped unit springs llla and lllb, thereby manufacturing the spring structure 1 shown in FIGS. 1 to 3. Herein, in the case that the solid body has no vertical through hole defining the inner diameter of the coil-shaped spring portion, the vertical hole must be formed to define the inner diameter of the coil-shaped spring portion after the spiral groove is formed. The cutting tool may be a variety of tools used for cutting a metal, such as a tool for cutting a metal by using a laser, a tool for cutting a metal by friction with a diamond cutting blade, or a wire-cut electric discharge machine. Referring to FIGS. 12 to 14, two coil-shaped unit portions 111' are formed by forming two spiral grooves 110. However, when a plurality of spiral grooves are formed parallel to each other at regular intervals, a plurality of coil-shaped unit portions 111' are formed according to the number of the spiral grooves 110 such that the coil-shaped unit portions are arranged at regular intervals in an overlapping alignment. In addition, when the solid body 100 is cut, a starting position of the spiral groove 110 may be adjusted whereby the spring structure having the support portion 12 positioned at only an end of the spring structure is manufactured as shown in FIG. 4. In other words, the present invention can adjust the width and depth of a cutting portion (i.e., the width and depth of the spiral groove 110), staring and end positions of the cutting portion (i.e., staring and end positions of the spiral groove 110), and the number of the cutting portions (spiral grooves 110) arranged parallel to each other at regular intervals, thereby manufacturing various spring structures described above.

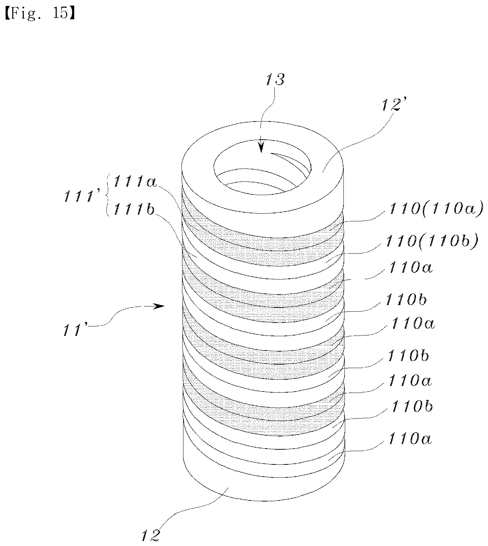

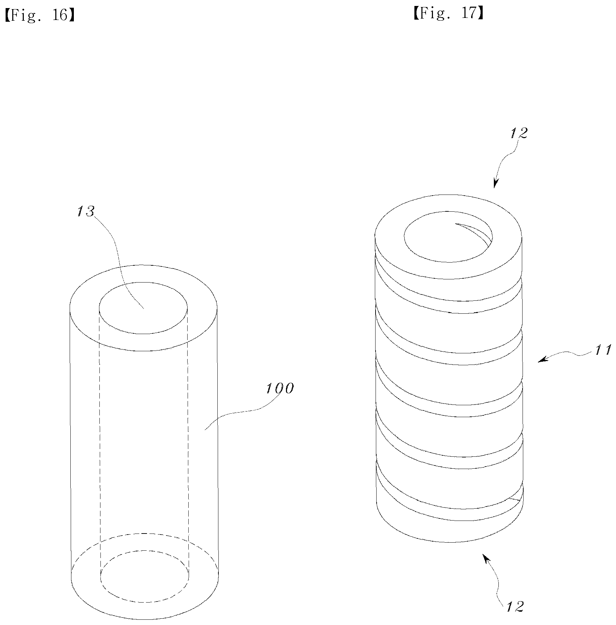

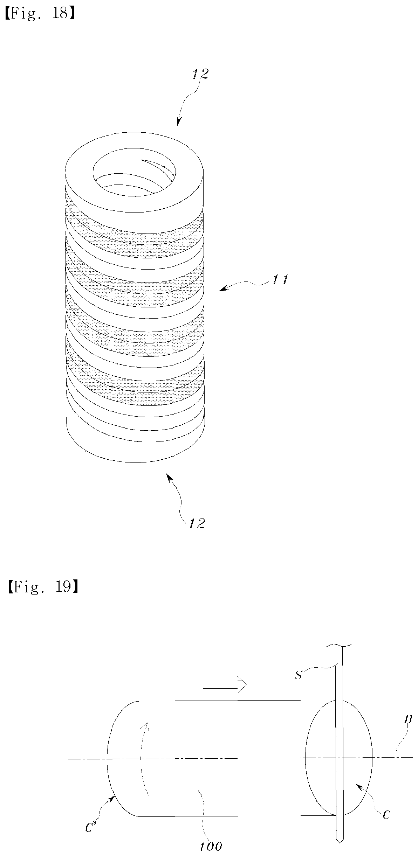

The forming of the through hole includes forming a through hole by cutting the solid body 100 from upward to downward to form the through hole 13 passing through the upper and lower surfaces of the solid body 100. Due to the forming of the through hole, the spring structure including the coil-shaped spring portion, the support portion, and the through hole is manufactured. When the center axis B of the through hole 13 and a center axis A of the solid body 100 coincide with each other, the spring structure 2 as shown in FIG. 15 is manufactured. When the through hole 13 is formed eccentrically from the center axis A of the solid body 100 such that the center axis B of the through hole 13, that is, the inner diameter center axis of the coil-shaped spring portion and the center axis A of the solid body 100 do not coincide with each other, the spring structure as shown in FIG. 8 is manufactured. In the forming of the through hole, the inner diameter of the coil-shaped spring portion can be easily adjusted by adjusting the amount of cutting, that is, by adjusting the diameter of the through hole 13. The method described with reference to FIGS. 12 to 15 is characterized in that the coil-shaped portion 11' and the support portion 12' are formed before the through hole 13 is formed. However, as shown in FIGS. 16 and 18, the through hole 13 is formed in the solid body 100 first and then the outer side surface of the solid body 100 is cut to form the coil-shaped spring portion 11 and the support portion 12.

A method of manufacturing a spring structure according to a second embodiment of the present invention does not perform forming of the through hole and includes: forming an indentation groove 14 indented on the solid body 100 by cutting the solid body 100 from upward to downward after the forming of the coil-shaped unit portions to form the plurality of coil-shaped unit portions. The spring structure as shown in FIG. 10 is manufactured by the method, wherein the forming of the coil-shaped unit portions may be performed after the forming of the indentation groove.

A method of manufacturing a metal spring structure according to a third embodiment of the present invention will be described with reference to FIG. 19. In the method, a linear-shaped cutting part S of a processing machine such as a wire-cut electric discharge machine is placed at an end C or C' of the solid body such that the cutting part horizontally passes a portion that will be the inner diameter center axis B of the coil-shaped spring portion. Thereafter, one or both the solid body and the cutting part S are rotated and at the same time, one or both the solid body and the cutting part S are moved forward or backward along the portion that will be the inner diameter center axis of the coil-shaped spring portion to cut the solid body, thereby simultaneously forming two coil-shaped unit springs. Herein, the center axis of rotation of the solid body or the cutting part S must coincide with the portion that will be the inner diameter center axis of the coil-shaped spring portion.

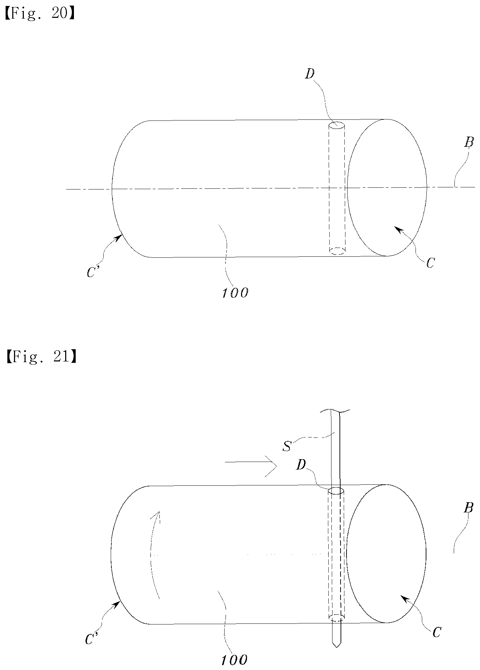

A method of manufacturing a metal spring structure according to a fourth embodiment of the present invention will be described with reference to FIGS. 20 and 21, wherein a side through hole D is formed by horizontally passing through the side surface of the solid body 100 so as to pass a portion that will be the inner diameter center axis of the coil-shaped spring portion, and a linear-shaped cutting part S of a processing machine such as a wire-cut electric discharge machine is placed in the side through hole. Thereafter, one or both the solid body and the cutting part S are rotated and at the same time, one or both the solid body and the cutting part S are moved forward or backward along the portion that will be the inner diameter center axis of the coil-shaped spring portion to cut the solid body, thereby simultaneously forming two coil-shaped unit springs and forming the support portion having a non-spring structure at one or opposite ends of the solid body. Herein, when the solid body and the cutting part S are rotated at the same time, the center axes of rotation thereof must coincide with each other and must coincide with the portion that will be the inner diameter center axis of the coil-shaped spring portion. When the solid body and the cutting part S are moved, they must be moved along the portion that will be the inner diameter center axis of the coil-shaped spring portion. In this case, the solid body or the cutting part S can be adjusted in moving speed in forward and backward directions and in rotational speed, thereby variously forming the vertical thickness T2 of the wire rods of the coil-shaped unit springs.

Although the preferred embodiment of the present invention have been disclosed for illustrative purposes, those skilled in the art will appreciate that various modifications, additions and substitutions are possible, without departing from the scope and spirit of the invention as disclosed in the accompanying claims.

## Claims

1. An integral spring structure, comprising:
a coil-shaped spring portion including multiple coil- shaped unit springs having a same inner diameter center axis, and alternately arranged at regular intervals such that a wire rod of one of the coil-shaped unit springs and a wire rod of a remaining one of the coil-shaped unit springs overlap each other; and a support portion having a non-spring structure, the support portion being connected with each of the coil-shaped unit springs and supporting the coil-shaped spring portion.

2. The integral spring structure of claim 1, wherein the coil-shaped spring portion is configured such that a different number of the coil-shaped unit springs is provided in each predetermined section.

3. The integral spring structure of claim 1, wherein a plurality of coil-shaped spring portions are provided, and a different number of the coil-shaped unit springs is provided in each of the coil-shaped spring portions.

4. The integral spring structure of claim 1, further comprising: a non-metallic elastic material inserted between the wire rods of the coil-shaped spring portion.

5. The integral spring structure of claim 1, wherein the coil-shaped unit spring having a spiral shape is made of an elastic material, and the support portion is provided on at least one of upper and lower ends of the coil-shaped spring portion.

6. A method of manufacturing a spring structure having multiple coil-shaped unit springs, the method being configured to manufacture the spring structure by cutting a solid body and comprising:
forming coil-shaped unit portions by cutting an outer side surface of the solid body in a spiral shape to form a plurality of spiral grooves arranged parallel to each other at regular intervals, thereby forming a plurality of coil-shaped unit portions arranged parallel to each other at regular intervals in an overlapping alignment and forming a support portion connected with the coil-shaped unit portions.

7. The method of claim 6, further comprising:
forming a through hole by cutting the solid body from upward to downward to form the through hole passing through upper and lower surfaces of the solid body.

8. A method of manufacturing a spring structure, the method being configured to manufacture the spring structure by cutting a metal solid body, wherein a linear-shaped cutting part of a processing machine such as a wire-cut electric discharge machine is horizontally placed at an end of the solid body such that the cutting part passes a portion that will be an inner diameter center axis of a coil-shaped spring portion, and then one or both the solid body and the cutting part are rotated and at the same time, one or both the solid body and the cutting part are moved forward or backward along the portion that will be the inner diameter center axis of the coil-shaped spring portion.

9. A method of manufacturing a spring structure, the method being configured to manufacture the spring structure by cutting a metal solid body, wherein a side through hole is formed by horizontally passing through a side surface of the solid body so as to pass a portion that will be an inner diameter center axis of a coil-shaped spring portion, and a linear-shaped cutting part (S) of a processing machine such as a wire-cut electric discharge machine is placed in the hole, and then one or both the solid body and the cutting part are rotated and at the same time, one or both the solid body and the cutting part are moved forward or backward along the portion that will be the inner diameter center axis of the coil-shaped spring portion.

10. The method of claim 9, wherein when the cutting part and the solid body are rotated at the same time, center axes of rotation thereof coincide with each other.
